# FASCICULE DE BREVET EUROPEEN

(11) **EP 3 241 724 B1**
(45) Date de publication et mention de la délivrance du brevet: **05.12.2018**
(21) Numéro de dépôt: 17166650.6
(22) Date de dépôt: 13.04.2017
(51) Int. Cl.: B62D 33/04, B60P 3/20

(54) **CARROSSERIE DE VÉHICULE ROUTIER DE TRANSPORT DE MARCHANDISES COMPRENANT UNE CLOISON DE COMPARTIMENTAGE**
KARROSSERIE EINES STRASSENFAHRZEUGS FÜR DEN WARENTRANSPORT, DIE EINE TRENNWAND ZUR UNTERTEILUNG DER LADEFLÄCHE UMFASST
BODY OF A ROAD VEHICLE FOR TRANSPORTING GOODS COMPRISING A SEPARATING PARTITION

(30) Priorité: 04.05.2016 FR 1654031
(43) Date de publication de la demande: 08.11.2017
(73) Titulaire: Jean Chereau SAS, 50220 Ducey (FR)
(72) Inventeur: BUISINE, François, 35140 SAINT AUBIN DU CORMIER (FR); LEROUX, François, 50300 Saint Senier Sous Avranches (FR)
(74) Mandataire: Casalonga

(56) Documents cités:
- EP-A1- 2 703 214
- DE-A1-102008 048 157
- DE-U1-202012 104 372
- FR-A1- 2 977 854
- JP-A- 2006 056 431

## Description

La présente invention concerne le domaine des carrosseries destinées à être montées par exemple sur les châssis de véhicules routiers de transport de marchandises tels que des camions, des semi-remorques ou des remorques ou des porteurs.

Plus particulièrement, la présente invention concerne le domaine des carrosseries frigorifiques.

L'espace de chargement intérieur d'une carrosserie est délimité par deux flancs verticaux opposés, un plancher ou fond, un plafond ou pavillon, une face avant et une face arrière assemblés entre eux. Une carrosserie frigorifique permet de transporter des marchandises ou des denrées périssables nécessitant d'être maintenues à une température constante, généralement inférieure à la température extérieure. Dans ce but, la carrosserie comprend un groupe ou machine frigorifique pour envoyer de l'air à température régulée à l'intérieur de l'espace de chargement.

Pour une carrosserie frigorifique, il peut être nécessaire de compartimenter l'espace de chargement compte tenu du volume important de cet espace. En outre, ceci permet de pouvoir disposer de plusieurs compartiments pouvant être maintenus à des températures différentes, par exemple pour le transport de différentes familles de marchandises. On parle alors généralement de fonctionnement « multi-températures » de la carrosserie frigorifique.

Pour réaliser ce compartimentage, il est généralement utilisé au moins une cloison articulée à rotation sous le pavillon de la carrosserie et mobile entre une position de stockage le long dudit pavillon et une position rabattue de séparation dans laquelle elle s'étend verticalement jusqu'au plancher.

Classiquement, une telle cloison est montée sur des chariots qui sont mobiles à l'intérieur de rails longitudinaux fixés sur le pavillon de la carrosserie. Ainsi, le volume des compartiments créés à l'intérieur de la carrosserie peut être modulé.

Le JP 2006 056431 A, qui est considéré comme étant l'état de la technique le plus proche, divulgue une camion réfrigéré avec cloison ayant une position de stockage et pouvant être déplacé dans la direction longitudinale de la zone de stockage. Un commutateur identifie quand la partition est en position de stockage et empêche l'unité de réfrigération d'exploiter une opération de deux zones de température.

La présente invention vise à prévoir une carrosserie frigorifique pour le transport de marchandises sous température contrôlée dans laquelle l'espace de chargement peut être compartimenté et permettant d'obtenir un fonctionnement optimisé de la machine frigorifique associée.

Dans un mode de réalisation, la carrosserie de véhicule routier de transport de marchandises comprend un espace de chargement intérieur, une machine frigorifique pour contrôler la température à l'intérieur de l'espace de chargement, et au moins une cloison mobile longitudinalement à l'intérieur de l'espace de chargement et déplaçable entre une position de rangement et une position d'utilisation pour le compartimentage de l'espace de chargement.

Selon une caractéristique de la carrosserie, celle-ci comprend en outre un moyen détecteur de position pour détecter la position de rangement ou d'utilisation de ladite cloison et pour déterminer le positionnement longitudinal de ladite cloison à l'intérieur de l'espace de chargement dans ladite position d'utilisation.

Selon une autre caractéristique de la carrosserie, une unité de commande est apte à commander le fonctionnement de la machine frigorifique au moins en fonction de signaux issus dudit moyen détecteur de position et représentatifs de la position de rangement ou d'utilisation de ladite cloison et du positionnement longitudinal de ladite cloison lorsque ladite cloison est en position d'utilisation.

Ainsi, les positions de la cloison à l'intérieur de l'espace de chargement délimité par des parois de la carrosserie peuvent être prises en compte pour commander le fonctionnement de la machine frigorifique.

Lorsque la cloison se trouve dans la position d'utilisation pour le compartimentage de l'espace de chargement, la régulation de la température peut être réalisée en tenant compte de la dimension longitudinale du ou des compartiments à refroidir. Ceci permet de limiter la consommation énergétique de la machine frigorifique. En effet, la puissance de la machine frigorifique à mettre en oeuvre peut ainsi être adaptée selon la dimension longitudinale du ou des compartiments à refroidir.

On entend « par machine frigorifique », une machine permettant d'envoyer un gaz à température contrôlée à l'intérieur de l'espace de chargement de la carrosserie. La machine frigorifique peut par exemple être une machine frigorifique à moteur thermique, une machine frigorifique à moteur électrique, une machine frigorifique hybride ou encore une machine frigorifique fonctionnant sur le principe de la cryogénie, par exemple à l'azote ou au dioxyde de carbone.

Dans un mode de réalisation avantageux, il est par exemple possible de prévoir un pilotage du fonctionnement de la machine frigorifique au moins en fonction du volume d'au moins un des compartiments délimités par ladite cloison dans la position d'utilisation, ce volume étant calculé à partir des signaux issus dudit moyen détecteur de position et représentatifs du positionnement longitudinal de ladite cloison.

Dans un mode de réalisation, la machine frigorifique peut comprendre un unique évaporateur.

Dans un autre mode de réalisation, la machine frigorifique peut comprendre au moins un évaporateur avant et un évaporateur arrière disposés longitudinalement de part et d'autre de ladite cloison. On entend par « avant » et « arrière », le positionnement des évaporateurs en considérant le véhicule routier équipé de la carrosserie.

Ainsi, il est possible de prévoir une régulation indépendante de la température des compartiments délimités par ladite cloison dans la position d'utilisation avec des zones de températures différentes à l'intérieur de l'espace de chargement. Dans ce but, l'unité de contrôle électronique peut commander indépendamment le fonctionnement des évaporateurs avant et arrière en fonction des signaux issus dudit moyen détecteur de position.

Les évaporateurs avant et arrière sont de préférence associés à un compresseur unique de la machine frigorifique. Alternativement, il est possible de prévoir une machine frigorifique comprenant un premier compresseur entraîné par une première source d'énergie et associé à l'évaporateur avant, et un deuxième compresseur entraîné par une deuxième source d'énergie autonome et associé à l'évaporateur arrière.

Dans un mode de réalisation particulier, la carrosserie peut comprendre un ou plusieurs moyens d'émission de signaux d'alarme, par exemple visuels ou lumineux, pouvant être déclenchés par l'unité de commande, par exemple lorsqu'un utilisateur souhaite un fonctionnement avec des zones de températures différentes à l'intérieur de l'espace de chargement alors que la cloison est à l'état relevé. De tels moyens d'émission de signaux d'alarme peuvent par exemple être prévus sur le tableau de commande de la machine frigorifique.

De préférence, la machine frigorifique est équipée d'une carte de circuit imprimé comprenant l'unité de commande. La carte de circuit imprimé propre à la machine frigorifique comprend ainsi l'unité de commande. En variante, il est cependant possible de prévoir une unité de commande spécifique qui est équipée d'une interface reliée à cette carte de circuit imprimée par une liaison de données. Dans ce cas, cette unité de commande spécifique est reliée d'une part au moyen détecteur de position associé à la cloison et d'autre part à la carte de circuit imprimée de la machine frigorifique, l'unité de contrôle commandant le fonctionnement de la machine frigorifique en fonction de données transmises à la carte de circuit imprimée. Cette unité de commande spécifique peut par exemple être encastrée dans le plancher de la carrosserie.

A titre indicatif, le moyen détecteur de position associé à la cloison peut par exemple comprendre un télémètre, notamment un télémètre laser. Avec un tel capteur de mesure, un seul signal de mesure permet la détection de la position de rangement ou d'utilisation de ladite cloison et la détermination de la position longitudinale de ladite cloison à l'intérieur de l'espace de chargement dans ladite position d'utilisation.

En variante, le moyen détecteur de position peut comprendre un télémètre à ultrasons, ou encore un capteur résistif en bande fixé sur le pavillon de la carrosserie et un contacteur fixé sur la cloison pour assurer une continuité électrique uniquement lorsque la cloison est dans la position d'utilisation. Dans cette position, la résistance électrique permet de connaitre la position longitudinale de ladite cloison dans cette position d'utilisation.

Le moyen détecteur de position peut comprendre un ou plusieurs capteurs. Dans un mode de réalisation, le moyen détecteur de position comprend deux capteurs, l'un pour assurer la fonction de détection de la position de rangement ou d'utilisation de ladite cloison et l'autre pour la détermination de la position longitudinale de la cloison. Par exemple, le moyen détecteur de position peut comprendre un premier capteur pour connaître la position longitudinale cette cloison, et un deuxième capteur pour détecter la position de rangement ou d'utilisation de la cloison. Dans ce cas, le premier capteur peut par exemple être un capteur à déroulement de câble relié à la cloison. Alternativement, ce premier capteur peut être un télémètre dont le faisceau est orienté vers une platine fixée sur un chariot coulissant supportant la cloison. Le deuxième capteur peut par exemple être du type poussoir, fixé sur le chariot et sur lequel la cloison appuie directement ou non dans la position de rangement.

Dans un mode de réalisation particulier, la cloison peut être montée coulissante le long d'un pavillon de la carrosserie et mobile à rotation entre la position de rangement dans laquelle elle s'étend le long dudit pavillon et la position d'utilisation. Avec une telle configuration, la carrosserie peut comprendre au moins un rail fixé sur le pavillon de la carrosserie, au moins un chariot monté de façon coulissante le long dudit rail, ladite cloison étant montée à rotation sur ledit chariot.

L'invention concerne également un procédé de fonctionnement d'une machine frigorifique de carrosserie de véhicule routier de transport de marchandises qui comprend un espace de chargement intérieur et au moins une cloison mobile longitudinalement à l'intérieur de l'espace de chargement et mobile entre une position de rangement et une position d'utilisation. Le procédé comprend : détecter la position de rangement ou d'utilisation de la cloison, déterminer le positionnement longitudinal de la cloison à l'intérieur de l'espace de chargement dans la position d'utilisation, et commander la machine frigorifique au moins en fonction de la position de rangement ou d'utilisation de ladite cloison et du positionnement longitudinal de ladite cloison à l'intérieur de l'espace de chargement lorsque ladite cloison est en position d'utilisation.

Dans un mode de mise en oeuvre, il est possible de commander au moins un évaporateur avant et un évaporateur arrière de la machine frigorifique disposés longitudinalement de part et d'autre de ladite cloison en fonction de la position de rangement ou d'utilisation et du positionnement longitudinal de ladite cloison pour réguler de façon indépendante la température de compartiments délimités par ladite cloison en position d'utilisation.

Dans un mode de mise en oeuvre avantageux, le procédé peut interdire un fonctionnement des évaporateurs avant et arrière correspondant à des valeurs de consigne de température différentes en cas de détection de la position de rangement de la cloison. Ainsi, les éventuelles erreurs de pilotage de la machine frigorifique pouvant occasionner des conflits entre les modes de fonctionnement des évaporateurs ainsi que des surconsommations énergétiques sont évitées.

Alternativement ou en combinaison, le procédé peut comprendre une étape d'émission d'un signal d'avertissement lors d'un réglage manuel de valeurs de consigne de température différentes des évaporateurs avant et arrière en cas de détection de la position de rangement de la cloison.

Dans un mode de mise en oeuvre particulier, le procédé comprend : calculer le volume d'au moins un des compartiments délimités par ladite cloison en position d'utilisation à partir du positionnement longitudinal de ladite cloison, et commander la machine frigorifique au moins en fonction dudit volume calculé.

Dans un mode de mise en oeuvre particulier, le procédé comprend : émettre un signal d'avertissement en cas de détection d'un déplacement de la cloison de la position de rangement vers la position d'utilisation et/ou en cas de détection d'un déplacement longitudinal de la cloison, lors d'une phase de roulage de la carrosserie. Ainsi, un déverrouillage intempestif de la cloison de sa position de rangement et/ou un déplacement longitudinal de la cloison à l'intérieur de l'espace de chargement peuvent être signalés.

La présente invention sera mieux comprise à l'étude de la description détaillée de modes de réalisation pris à titre d'exemples nullement limitatifs et illustrés par les dessins annexés, sur lesquels :
- les figures 1 et 2 sont des vues schématiques en coupe longitudinale de l'intérieur d'une carrosserie frigorifique selon un premier exemple de réalisation de l'invention,
- la figure 3 est une vue en perspective éclatée d'un système de compartimentage de la carrosserie frigorifique de la figure 1,
- la figure 4 est une vue schématique en coupe transversale de la carrosserie frigorifique de la figure 1, et
- les figures 5 et 6 sont des vues schématiques en coupe transversale de carrosseries frigorifiques selon des deuxième et troisième exemples de réalisation de l'invention.

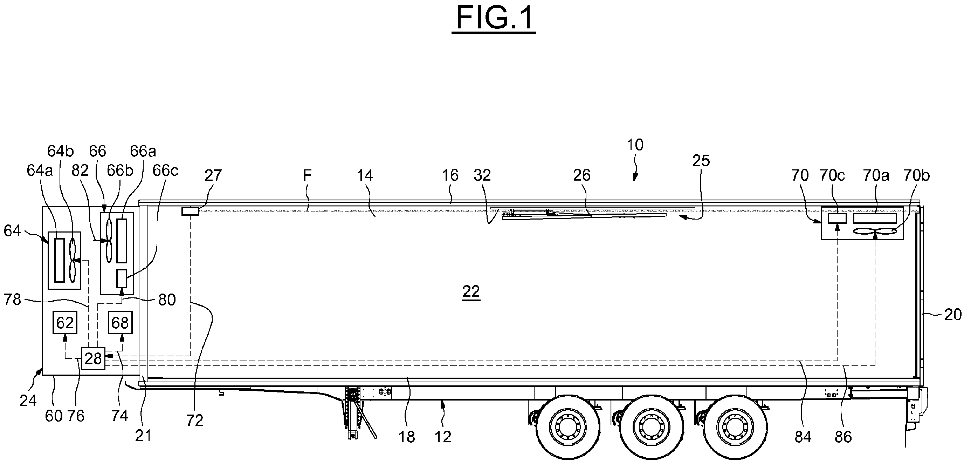

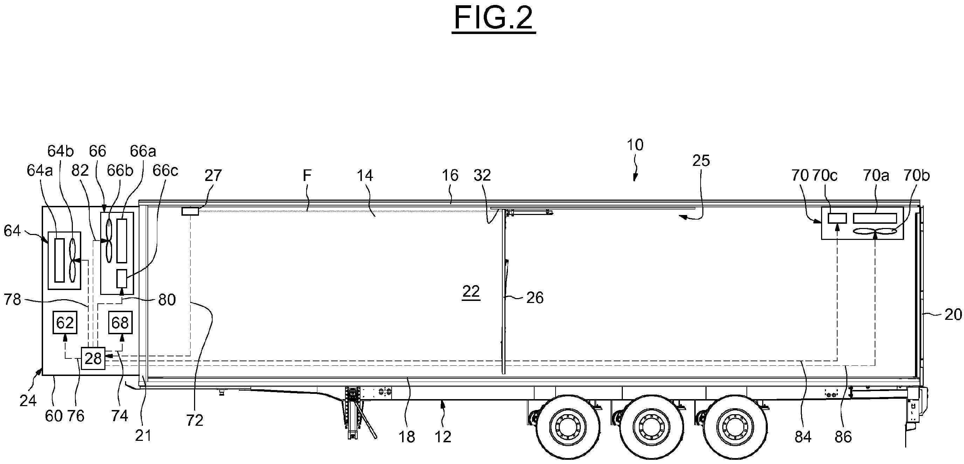

Sur les figures 1 et 2, on a représenté une carrosserie frigorifique, référencée 10 dans son ensemble, montée sur un châssis 12 de véhicule de transport routier s'étendant longitudinalement et soutenu par des roues.

La carrosserie 10 comprend deux flancs 14 verticaux opposés s'étendant longitudinalement, un plafond ou pavillon 16, un plancher 18, une face arrière 20 et une face avant 21 assemblés entre eux pour délimiter un espace de chargement 22 intérieur. Les flancs 14, le pavillon 16, le plancher 18 et les faces arrière 20 et avant 21 forment les parois de la carrosserie. La face arrière 20 peut être constituée par une porte à au moins un battant ou un volet coulissant de sorte à permettre l'accès à l'espace de chargement 22.

Comme cela sera décrit plus en détail par la suite, la carrosserie 10 comprend également un groupe ou machine frigorifique 24 pour envoyer de l'air à température régulée à l'intérieur de l'espace de chargement 22. De manière connue en soi, l'air peut être extrait de l'espace de chargement 22 par la machine frigorifique 24 et, après mise à température, être réinjecté dans cet espace.

La carrosserie 10 comprend un système 25 de compartimentage de l'espace de chargement 22 intérieur. Le système 25 est monté sur le pavillon 16 et comprend une cloison 26 mobile entre une position relevée de stockage ou de rangement le long dudit pavillon (figure 1) et une position abaissée de séparation (figure 2) dans laquelle deux compartiments sont délimités longitudinalement de part et d'autre de la cloison 26 à l'intérieur de l'espace de chargement 22. Dans l'exemple de réalisation illustré, la cloison 26 s'étend verticalement jusqu'au voisinage immédiat du plancher 18 dans la position abaissée d'utilisation. La cloison 26 s'étend transversalement entre les flancs 14.

Comme cela sera également décrit plus en détail par la suite, la carrosserie 10 comprend en outre un capteur 27 de détection de position de la cloison 26, et une unité de commande 28 apte à commander le fonctionnement de la machine frigorifique 24 au moins en fonction de signaux issus du capteur.

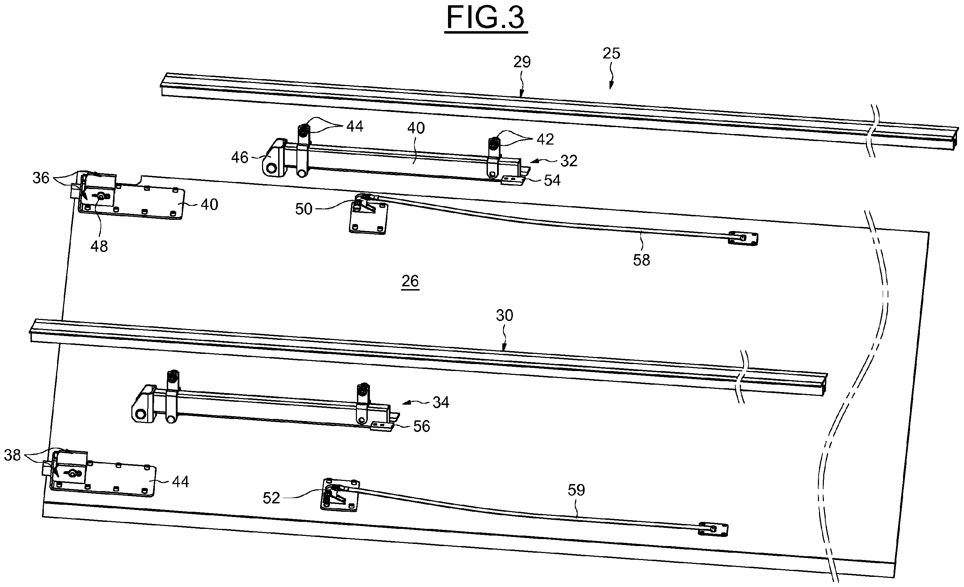

Comme illustré à la figure 3, le système 25 de compartimentage comprend dans cet exemple de réalisation deux rails 29, 30 fixés sur le pavillon de la carrosserie du côté de l'espace de chargement, deux chariots 32, 34 de support montés chacun de façon coulissante à l'intérieur d'un desdits rails et supportant la cloison 26. Les chariots 32, 34 permettent de positionner la cloison 26 dans l'espace de chargement de la carrosserie à la position longitudinale souhaitée.

Le système 25 comprend encore deux groupes de platines 36, 38 solidaires de la cloison 26 et associés chacun à un desdits chariots 32, 34. Chaque groupe de platines 36, 38 est fixé sur la cloison 26 par l'intermédiaire d'une bride (non référencée) commune vissée sur ladite cloison.

Les rails 29, 30, les chariots 32, 34 et les groupes de platines 36, 38 étant respectivement identiques dans l'exemple de réalisation illustré, on décrira ici uniquement l'un d'entre eux. Le rail 29 s'étend horizontalement et longitudinalement le long du pavillon de la carrosserie. Le chariot 32 comprend un corps 40 sur lequel sont montées deux paires de galets 42, 44 de guidage par l'intermédiaire de deux brides (non référencées) fixées sur ledit corps. Les galets 42, 44 sont disposés à l'intérieur du rail 29 et destinés à glisser ou rouler à l'intérieur du rail. En variante, il est possible de remplacer les galets par d'autres moyens de guidage, par exemple des roulements.

Le chariot 32 comprend également, fixée à une extrémité libre du corps 40, une platine d'articulation 46 pour le montage à rotation de la cloison 26 sur le chariot. La platine d'articulation 46 est disposée transversalement entre les platines 36. Un axe 48 d'articulation horizontal s'étend transversalement à travers les platines 36 et la platine d'articulation 56 pour le montage à rotation de la cloison 26. La cloison 26 est mobile autour de l'axe 48 d'articulation.

Le système 25 comprend également des moyens pour assurer le verrouillage de la cloison 26 dans la position de rangement et éviter une rotation non souhaitée de ladite cloison de cette position de rangement vers la position d'utilisation sous l'effet de son propre poids. Dans l'exemple de réalisation illustré, les moyens de verrouillage comprennent des crochets 50, 52 montés chacun sur la cloison 26 par l'intermédiaire d'une platine (non référencée) de fixation et associés chacun à un des chariots 32, 34.

Les moyens de verrouillage comprennent également un ergot 54, 56 d'accrochage fixé sur le corps du chariot 32, 34 associé et coopérant avec le crochet 50, 52 dans la position de rangement de la cloison 26. Le système 25 comprend encore deux sangles 58, 59 accrochées chacune à l'un des crochets 50, 52 pour permettre à un opérateur en tirant sur ces sangles d'obtenir la rotation des crochets et de déverrouiller la cloison 26.

Le système 25 comprend également des moyens (non représentés) pour assurer le blocage longitudinal du chariot 32, et plus généralement de la cloison 26, dans la position de rangement et dans la position d'utilisation verticale.

En variante, il est possible de prévoir d'autre moyens que ceux décrits précédemment pour assurer le montage coulissant de la cloison 26 à l'intérieur de l'espace de chargement 22 de la carrosserie et son montage mobile entre l'état de rangement et l'état d'utilisation. Par exemple, il pourrait être possible de prévoir une cloison montée mobile à rotation autour d'un axe d'articulation vertical de sorte qu'elle s'étend le long d'un des flancs 14 de la carrosserie dans la position de rangement.

En se référant de nouveau à la figure 1, la machine frigorifique 24, qui est prévue pour contrôler la température à l'intérieur de l'espace de chargement 22, comprend un bloc carter 60 fixé sur la face avant 21 de la carrosserie à l'extérieur de l'espace de chargement 22. En variante, il est possible de monter ce bloc carter 60 sur une des autres parois de la carrosserie 10, par exemple sur le pavillon 16 ou sur le plancher 18.

Dans l'exemple de réalisation illustré, la machine frigorifique 24 comprend un circuit frigorifique (non représenté) qui comporte un compresseur 62, un condenseur 64, et un évaporateur 66 avant. La machine frigorifique 24 comprend également un moteur 68 pour l'entraînement du compresseur 62. Le moteur 68 peut être un moteur à combustion interne alimenté en carburant par un réservoir propre, ou encore un moteur électrique.

En variante, la machine frigorifique peut être de tout autre type par exemple du type cryogénique avec injection d'azote liquide directement dans la carrosserie ou avec évaporation de l'azote dans un ou plusieurs échangeurs et diffusion par d'un ou plusieurs évaporateurs.

Dans l'exemple de réalisation illustré, le compresseur 62, le condenseur 64 et l'évaporateur 66 sont disposés à l'intérieur du bloc carter 60. En variante, il est possible de prévoir un montage de l'évaporateur 66 associé directement à l'intérieur de l'espace de chargement 22, par exemple sur la face avant 21 de la carrosserie.

Le condenseur 64 comprend un corps d'échange 64a thermique traversé par la fluide frigorifique du circuit et un ou des ventilateurs 64b pour générer un flux d'air sur ledit corps avant d'être rejeté dans l'environnement extérieur. L'évaporateur 66 avant comprend également un corps d'échange 66a thermique traversé par le fluide frigorifique du circuit et un ou des ventilateurs 66b pour générer un flux d'air sur ce corps, cet air étant extrait de l'espace de chargement 22 avant d'être réintroduit dans cet espace après avoir était mis en température. Des ouvertures (non représentées) sont ménagées à cet effet dans l'épaisseur de la face avant 21 de la carrosserie pour permettre cette extraction et réintroduction d'air à l'intérieur de l'espace de chargement 22. L'évaporateur 66 comprend également un détendeur 66c monté en amont du corps d'échange 66a en considérant le sens de circulation du fluide frigorifique dans le circuit.

Dans l'exemple de réalisation illustré, le circuit frigorifique de la machine comprend en outre un évaporateur 70 arrière. Dans la position d'utilisation abaissée de la cloison 26, l'évaporateur 66 avant permet la régulation de température de l'un des deux compartiments délimités par cette cloison, en l'espèce le compartiment avant, tandis que l'évaporateur 70 arrière permet la régulation de l'autre compartiment, en l'espèce le compartiment arrière.

L'évaporateur 70 arrière est ici fixé sur le pavillon 16 de la carrosserie du côté de l'espace de chargement 22 et à proximité de la face arrière 20. L'évaporateur 70 comprend un corps d'échange 70a thermique traversé par la fluide frigorifique du circuit et un ou des ventilateurs 70b pour générer un flux d'air sur ce corps, cet air étant extrait de l'espace de chargement 22 avant d'être réintroduit dans cet espace après avoir était mis en température. L'évaporateur 70 comprend également un détendeur 70c monté en amont du corps d'échange 70a en considérant le sens de circulation du fluide frigorifique dans le circuit.

Comme indiqué précédemment, le fonctionnement de la machine frigorifique 24 est commandé par l'unité de commande 28 recevant les signaux émis par le capteur 27 de détection qui est associé à la cloison 26. Le capteur 27 est monté à l'intérieur de l'espace de chargement 22. Le capteur 27 est prévu pour permettre une détection de la position de rangement ou d'utilisation de la cloison 26 et une détermination de son positionnement longitudinal à l'intérieur de l'espace de chargement 22 dans cette position d'utilisation.

Dans l'exemple de réalisation illustré, le capteur 27 est un télémètre laser. Le capteur 27 est orienté pour émettre, par exemple de façon continue, un faisceau lumineux F dirigé en direction de la cloison 26. Le capteur 27 est positionné ici de sorte que ce faisceau émis est réfléchi par la cloison 26 lorsque celle-ci est dans la position d'utilisation, et passe au-dessus de la cloison 26 et est réfléchi par la face arrière 20 de la carrosserie dans la position de rangement.

Dans l'exemple de réalisation illustré, le capteur 27 est fixé sur le pavillon 16 du côté de la face avant 21 de la carrosserie. En variante, il est possible de prévoir une autre disposition du capteur 27. Par exemple, le capteur 27 peut être fixé à la face avant 21 ou encore être fixé sur le pavillon 16 du côté de la face arrière 20 de la carrosserie. Dans ce dernier cas, le faisceau émis par le capteur est réfléchi par la face avant 21 de la carrosserie dans la position de rangement de la cloison 26.

Le signal de mesure issu du capteur 27 est représentatif de la position de rangement ou d'utilisation de la cloison 26 et de son positionnement longitudinal lorsque celle-ci est en position d'utilisation. En effet, si la distance mesurée par le capteur 27 correspond à la distance fixe entre ce capteur et la face arrière 20 de la carrosserie, alors la cloison 26 se trouve dans la position de rangement. Au contraire, si la distance mesurée est inférieure à cette distance fixe, alors la cloison 26 se trouve dans la position d'utilisation et la distance mesurée correspond au positionnement longitudinal de la cloison 26 à l'intérieur de l'espace de chargement 22. Le capteur 27 est raccordé à l'unité de commande 28 par l'intermédiaire d'une connexion 72 illustrée schématiquement en pointillés. La connexion 72 peut par exemple être filaire ou radioélectrique

L'unité de commande 28 comprend les moyens matériels et logiciels pour commander le fonctionnement de la machine frigorifique 24 à partir des signaux issus du capteur 27. Des lois de commande sont mémorisées ou élaborées dans l'unité de commande 28 électronique, par exemple sous la forme d'un logiciel programmé, de manière à commander les composants de la machine frigorifique 24 pour obtenir une régulation de température à l'intérieur de l'espace de chargement 22 correspondant à ces lois de commande.

Dans l'exemple de réalisation illustré, l'unité de commande 28 est apte à émettre des signaux de commande pour agir sur le moteur 68, le compresseur 62, le ou les ventilateurs 64b du condenseur, le détendeur 66c et le ou les ventilateurs 66b de l'évaporateur avant, et le détendeur 70c et le ou les ventilateurs 70b de l'évaporateur arrière, respectivement par l'intermédiaire de connexions 74 à 86 représentées en pointillés.

Par exemple, lorsque le signal issu du capteur 27 correspond à un état relevé de la cloison 26 dans sa position de rangement, l'unité de commande 28 commande le fonctionnement des évaporateurs 66 avant et 70 arrière de sorte à obtenir une régulation de température uniforme à l'intérieur de l'espace de chargement 22. L'unité de commande 28 peut également commander l'arrêt de l'évaporateur 70 arrière.

À partir du signal représentatif de cette position de rangement de la cloison 26 transmis par le capteur 27, l'unité de commande 28 peut interdire un fonctionnement des évaporateurs 66, 70 selon des valeurs de consigne de température différentes qui peuvent être déterminées par l'algorithme de l'unité ou fixées par l'utilisateur de la carrosserie.

Lorsque le signal issu du capteur 27 est représentatif d'un état abaissé de la cloison 26 dans sa position d'utilisation, l'unité de commande 28 commande le fonctionnement des évaporateurs 66, 70 arrière pour réguler de façon indépendante la température des deux compartiments délimités par la cloison 26.

En outre, à partir du signal représentatif de la position longitudinale de la cloison 26 à l'intérieur de l'espace de chargement 22 émis par le capteur 27, l'unité de commande 28 commande le fonctionnement des évaporateurs 66, 70 en fonction de la dimension longitudinale des compartiments à refroidir.

Par exemple, l'unité de commande 28 peut calculer le volume d'air de chacun de ces compartiments et adapter ainsi spécifiquement la commande des évaporateurs 66, 70. En variante, les signaux de commande émis par l'unité de commande 28 peuvent être établis à partir de lois de commande cartographiées et fonction du positionnement longitudinal de la cloison 26 dans la position d'utilisation abaissée.

Ainsi, en prenant en compte le positionnement longitudinal de la cloison 26 dans sa position d'utilisation, il est possible de réduire la consommation énergétique de la machine frigorifique 24. En effet, les puissances de la machine frigorifique 24 à mettre en oeuvre pour refroidir un volume limité à quelques m³ ou l'espace de chargement 22 dans sa totalité sont complètement différentes. Par ailleurs, si le volume de l'un des compartiments à refroidir est inférieur à une valeur seuil prédéterminée, l'unité de commande 28 peut limiter la vitesse de rotation du ventilateur de l'évaporateur associé à ce compartiment.

De manière connue en soi, pour commander le fonctionnement de la machine frigorifique 24, l'unité de commande 28 peut également recevoir des informations relatives à l'évolution de la température et/ou de la teneur en humidité de l'atmosphère contenue dans l'espace de chargement 22. Par exemple, plusieurs capteurs de température peuvent être répartis sur les flancs 14 et la face avant 21 de la carrosserie de sorte à pouvoir mesurer la température de chacun des compartiments délimités par la cloison 26 en position d'utilisation. De plus, l'unité de commande 28 peut transmettre à intervalles de temps réguliers l'ensemble des données transmises par les capteurs à un dispositif central de collecte déporté.

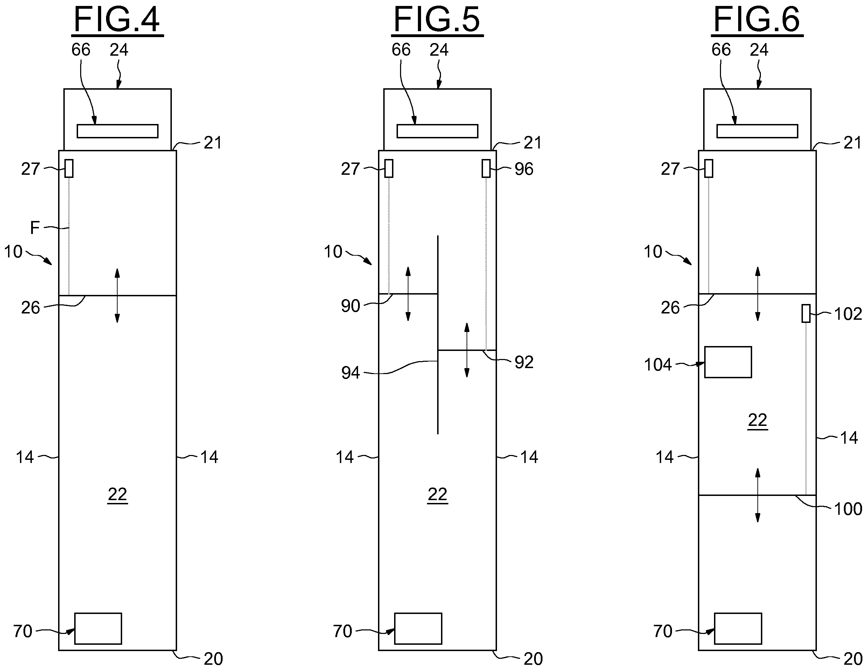

Comme décrit précédemment et illustré également à la figure 4, dans cet exemple de réalisation, la carrosserie 10 comprend l'unique cloison 26 transversale pour créer deux compartiments distincts à l'intérieur de l'espace de chargement 22.

En variante, comme illustré à la figure 5, sur laquelle les éléments identiques portent les mêmes références, la carrosserie 10 comprend deux cloisons 90, 92 disposées transversalement de part et d'autre d'une cloison longitudinale 94 interne de la carrosserie. En variante, la carrosserie 10 pourrait être dépourvue d'une telle cloison longitudinale.

De façon analogue au premier exemple de réalisation décrit, les cloisons 90, 92 sont montées coulissantes à l'intérieur de l'espace de chargement 22 comme cela est illustré schématiquement par les doubles flèches de cette figure. Chaque cloison 90, 92 est également mobile à rotation entre un état de rangement et un état d'utilisation. Dans cet exemple, la carrosserie 10 comprend donc les deux cloisons 90, 92 pour délimiter les deux compartiments à l'intérieur de l'espace de chargement 22 dans leur position d'utilisation.

De manière similaire au premier exemple de réalisation décrit, pour la détection des positions des cloisons 90 et 92, la carrosserie 10 comprend le capteur 27 et un capteur 96 additionnel analogue, ces capteurs étant associés chacun à une de ces cloisons et reliés à l'unité de commande (non représentée).

L'exemple de réalisation illustré à la figure 6, sur laquelle les éléments identiques portent les mêmes références, diffère du premier exemple décrit en ce que la carrosserie 10 comprend en outre une cloison 100 additionnelle de sorte à pouvoir délimiter à l'intérieur de l'espace de chargement 22 trois compartiments. La conception et le montage de la cloison 100 sont similaires à ceux de la cloison 26. La carrosserie 10 comprend un capteur 102 pour la détection des positions de la cloison 100 qui est relié à l'unité de commande.

Dans cet exemple de réalisation, la machine frigorifique 24 comprend en outre un évaporateur 104 intermédiaire interposé longitudinalement entre l'évaporateur avant 66 et l'évaporateur arrière 70 et dont le fonctionnement est également commandé par l'unité de commande. En position abaissée des cloisons 100 et 102, chaque évaporateur 66, 70, 104 est associé à un des compartiments délimités à l'intérieur de la carrosserie.

Dans les exemples de réalisation décrits, la carrosserie comprend au moins deux évaporateurs distincts pour permettre de réguler la température de chaque compartiment délimité par la ou les cloisons. En variante, il est également possible de prévoir une carrosserie comprenant un unique évaporateur, par exemple disposé à l'avant de l'espace de chargement intérieur.

## Revendications

1. Carrosserie de véhicule routier de transport de marchandises comprenant :
- un espace de chargement (22) intérieur,
- une machine frigorifique (24) pour contrôler la température à l'intérieur de l'espace de chargement, et
- au moins une cloison (26) mobile longitudinalement à l'intérieur de l'espace de chargement et déplaçable entre une position de rangement et une position d'utilisation pour le compartimentage de l'espace de chargement (22), **caractérisée en ce que** ladite carrosserie comprend en outre :
- au moins un moyen détecteur de position (27) pour détecter la position de rangement ou d'utilisation de ladite cloison et pour déterminer le positionnement longitudinal de ladite cloison à l'intérieur de l'espace de chargement (22) dans ladite position d'utilisation, et
- une unité de commande (28) apte à commander le fonctionnement de la machine frigorifique (24) au moins en fonction de signaux issus dudit moyen détecteur de position (27) et représentatifs de la position de rangement ou d'utilisation de ladite cloison et du positionnement longitudinal de ladite cloison lorsque ladite cloison est en position d'utilisation.

2. Carrosserie selon la revendication 1, dans laquelle l'unité de commande (28) est apte à commander le fonctionnement de la machine frigorifique (24) au moins en fonction du volume d'au moins un des compartiments délimités par ladite cloison dans la position d'utilisation, ledit volume étant calculé à partir des signaux issus dudit moyen détecteur de position (27) et représentatifs du positionnement longitudinal de ladite cloison.

3. Carrosserie selon la revendication 1 ou 2, dans laquelle la machine frigorifique (24) comprend au moins un évaporateur avant (66) et un évaporateur arrière (70) disposés longitudinalement de part et d'autre de ladite cloison.

4. Carrosserie selon la revendication 3, dans laquelle l'unité de commande (24) est apte à commander indépendamment le fonctionnement des évaporateurs avant et arrière en fonction des signaux issus dudit moyen détecteur de position (27).

5. Carrosserie selon l'une quelconque des revendications précédentes, dans laquelle la machine frigorifique (24) est équipée d'une carte de circuit imprimé comprenant l'unité de commande (28).

6. Carrosserie selon l'une quelconque des revendications précédentes, dans laquelle le moyen détecteur de position (27) comprend un télémètre, notamment un télémètre laser.

7. Carrosserie selon l'une quelconque des revendications précédentes, dans laquelle la cloison (26) est montée coulissante le long d'un pavillon de la carrosserie et mobile à rotation entre la position de rangement dans laquelle elle s'étend le long dudit pavillon et la position d'utilisation.

8. Procédé de fonctionnement d'une machine frigorifique de carrosserie de véhicule routier de transport de marchandises qui comprend un espace de chargement intérieur et au moins une cloison mobile longitudinalement à l'intérieur de l'espace de chargement et mobile entre une position de rangement et une position d'utilisation, le procédé comprenant:
- détecter la position de rangement ou d'utilisation de la cloison,
- déterminer le positionnement longitudinal de la cloison à l'intérieur de l'espace de chargement dans la position d'utilisation, et
- commander la machine frigorifique au moins en fonction de la position de rangement ou d'utilisation de ladite cloison et du positionnement longitudinal de ladite cloison à l'intérieur de l'espace de chargement lorsque ladite cloison est en position d'utilisation.

9. Procédé selon la revendication 8, comprenant : commander au moins un évaporateur avant et un évaporateur arrière de la machine frigorifique disposés longitudinalement de part et d'autre de ladite cloison en fonction de la position de rangement ou d'utilisation et du positionnement longitudinal de ladite cloison pour réguler de façon indépendante la température de compartiments délimités par ladite cloison en position d'utilisation.

10. Procédé selon la revendication 9, comprenant : interdire un fonctionnement des évaporateurs avant et arrière correspondant à des valeurs de consigne de température différentes en cas de détection de la position de rangement de la cloison.

11. Procédé selon la revendication 9 ou 10, comprenant : émettre un signal d'avertissement lors d'un réglage manuel de valeurs de consigne de température différentes pour les évaporateurs avant et arrière en cas de détection de la position de rangement de la cloison.

12. Procédé selon l'une quelconque des revendications 8 à 11, comprenant : calculer le volume d'au moins un des compartiments délimités par ladite cloison en position d'utilisation à partir du positionnement longitudinal de ladite cloison, et commander la machine frigorifique au moins en fonction dudit volume calculé.

13. Procédé selon l'une quelconque des revendications 8 à 12, comprenant : émettre un signal d'avertissement en cas de détection d'un déplacement de la cloison de la position de rangement vers la position d'utilisation et/ou en cas de détection d'un déplacement longitudinal de la cloison, lors d'une phase de roulage de la carrosserie.

## Patentansprüche

1. Karosserie eines Straßenfahrzeugs für den Warentransport, umfassend:
- einen Laderinnenraum (22),
- eine Kühlmaschine (24), um die Temperatur im Inneren des Laderaums zu steuern, und
- mindestens eine längs im Inneren des Laderaums bewegliche und zwischen einer Abstellposition und einer Verwendungsposition verschiebbare Trennwand (26), um den Laderaum (22) in Abteile zu unterteilen, **dadurch gekennzeichnet, dass** die Karosserie ferner umfasst:
- mindestens ein Positionserfassungsmittel (27), um die Abstell- oder Verwendungsposition der Trennwand zu erfassen, und um die Längspositionierung der Trennwand im Inneren des Laderaums (22) in der Verwendungsposition zu bestimmen, und
- eine Steuereinheit (28), die geeignet ist, den Betrieb der Kühlmaschine (24) zumindest in Abhängigkeit von Signalen zu steuern, die von dem Positionserfassungsmittel (27) kommen und für die Abstell- oder Verwendungsposition der Trennwand und die Längspositionierung der Trennwand, wenn die Trennwand in Verwendungsposition ist, repräsentativ sind.

2. Karosserie nach Anspruch 1, bei der die Steuereinheit (28) geeignet ist, den Betrieb der Kühlmaschine (24) zumindest in Abhängigkeit von dem Volumen mindestens eines der Abteile, die durch die Trennwand in der Verwendungsposition begrenzt sind, zu steuern, wobei das Volumen auf Basis der Signale, die von dem Positionserfassungsmittel (27) kommen und für die Längspositionierung der Trennwand repräsentativ sind, berechnet wird.

3. Karosserie nach Anspruch 1 oder 2, bei der die Kühlmaschine (24) mindestens einen vorderen Verdampfer (66) und einen hinteren Verdampfer (70) umfasst, die längs beiderseits der Trennwand angeordnet sind.

4. Karosserie nach Anspruch 3, bei der die Steuereinheit (24) geeignet ist, unabhängig den Betrieb der vorderen und hinteren Verdampfer in Abhängigkeit von den vom Positionserfassungsmittel (27) kommenden Signalen zu steuern.

5. Karosserie nach einem der vorhergehenden Ansprüche, bei der die Kühlmaschine (24) mit einer Leiterplatine, umfassend die Steuereinheit (28) ausgestattet ist.

6. Karosserie nach einem der vorhergehenden Ansprüche, bei der das Positionserfassungsmittel (27) ein Telemeter, insbesondere ein Laser-Telemeter, umfasst.

7. Karosserie nach einem der vorhergehenden Ansprüche, bei der die Trennwand (26) gleitend entlang eines Daches der Karosserie und drehbeweglich zwischen der Abstellposition, in der sie sich entlang des Daches erstreckt, und der Verwendungsposition montiert ist.

8. Verfahren für den Betrieb einer Kühlmaschine einer Karosserie eines Straßenfahrzeugs für den Warentransport, die einen Ladeinnenraum und mindestens eine längs im Inneren des Laderaums bewegliche und zwischen einer Abstellposition und einer Verwendungsposition bewegliche Trennwand umfasst, umfassend:
- die Erfassung der Abstell- oder Verwendungsposition der Trennwand,
- die Bestimmung der Längspositionierung der Trennwand im Inneren des Laderaums in der Verwendungsposition, und
- die Steuerung der Kühlmaschine zumindest in Abhängigkeit von der Abstell- oder Verwendungsposition der Trennwand und der Längspositionierung der Trennwand im Inneren des Laderaums, wenn sich die Trennwand in Verwendungsposition befindet.

9. Verfahren nach Anspruch 8, umfassend: die Steuerung mindestens eines vorderen Verdampfers und eines hinteren Verdampfers der Kühlmaschine, die längs beiderseits der Trennwand angeordnet sind, in Abhängigkeit von der Abstell- oder Verwendungsposition und der Längspositionierung der Trennwand, um auf unabhängige Weise die Temperatur von Abteilen, die von der Trennwand in Verwendungsposition begrenzt sind, zu regulieren.

10. Verfahren nach Anspruch 9, umfassend: das Verbot eines Betriebs der vorderen und hinteren Verdampfer entsprechend verschiedenen Temperatursollwerten im Falle einer Erfassung der Abstellposition der Trennwand.

11. Verfahren nach Anspruch 9 oder 10, umfassend: das Senden eines Alarmsignals im Falle einer manuellen Einstellung von verschiedenen Temperatursollwerten für die vorderen und hinteren Verdampfer im Falle einer Erfassung der Abstellposition der Trennwand.

12. Verfahren nach einem der Ansprüche 8 bis 11, umfassend: die Berechnung des Volumens mindestens eines der Abteile, die von der Trennwand in Verwendungsposition begrenzt werden, auf Basis der Längspositionierung der Trennwand und Steuerung der Kühlmaschine zumindest in Abhängigkeit von dem berechneten Volumen.

13. Verfahren nach einem der Ansprüche 8 bis 12, umfassend: das Senden eines Alarmsignals im Falle der Erfassung einer Verschiebung der Trennwand von der Abstellposition in die Verwendungsposition und/oder im Falle der Erfassung einer Längsverschiebung der Trennwand während einer Rollphase der Karosserie.

## Claims

1. Body of a road vehicle for freight transport, comprising:
- an interior loading space (22),
- a refrigerating machine (24) for controlling the temperature inside the loading space, and
- at least one partition (26) that is movable longitudinally inside the loading space and shiftable between a storage position and a use position for subdividing the loading space (22), **characterized in that** said body also comprises:
- at least one position detecting means (27) for detecting the storage position or use position of said partition and for determining the longitudinal position of said partition inside the loading space (22) in said use position, and
- a control unit (28) that is able to control the operation of the refrigerating machine (24) at least according to signals that are output by said position detecting means (27) and are representative of the storage position or use position of said partition and of the longitudinal position of said partition when said partition is in the use position.

2. Body according to Claim 1, wherein the control unit (28) is able to control the operation of the refrigerating machine (24) at least according to the volume of at least one of the compartments delimited by said partition in the use position, said volume being calculated on the basis of the signals that are output by said position detecting means (27) and are representative of the longitudinal position of said partition.

3. Body according to Claim 1 or 2, wherein the refrigerating machine (24) comprises at least one front evaporator (66) and one rear evaporator (70) that are disposed longitudinally on either side of said partition.

4. Body according to Claim 3, wherein the control unit (24) is able to independently control the operation of the front and rear evaporators according to the signals output by said position detecting means (27).

5. Body according to any one of the preceding claims, wherein the refrigerating machine (24) is equipped with a printed circuit board comprising the control unit (28) .

6. Body according to any one of the preceding claims, wherein the position detecting means (27) comprises a telemeter, notably a laser telemeter.

7. Body according to any one of the preceding claims, wherein the partition (26) is mounted so as to slide along a roof of the body and so as to be rotatable between the storage position, in which it extends along said roof, and the use position.

8. Operating method for a refrigerating machine of a body of a road vehicle for freight transport which comprises an interior loading space and at least one partition that is movable longitudinally inside the loading space and is movable between a storage position and a use position, the method comprising:
- detecting the storage position or use position of the partition,
- determining the longitudinal position of the partition inside the loading space in the use position, and
- controlling the refrigerating machine at least according to the storage position or use position of said partition and the longitudinal position of said partition inside the loading space when said partition is in the use position.

9. Method according to Claim 8, comprising: controlling at least one front evaporator and one rear evaporator of the refrigerating machine that are disposed longitudinally on either side of said partition according to the storage position or use position and to the longitudinal position of said partition in order to independently set the temperature of compartments delimited by said partition in the use position.

10. Method according to Claim 9, comprising: preventing corresponding operation of the front and rear evaporators at different setpoint temperatures if the storage position of the partition is detected.

11. Method according to Claim 9 or 10, comprising: outputting a warning signal during manual setting of different setpoint temperatures for the front and rear evaporators if the storage position of the partition is detected.

12. Method according to any one of Claims 8 to 11, comprising: calculating the volume of at least one of the compartments delimited by said partition in the use position from the longitudinal position of said partition, and controlling the refrigerating machine at least according to said calculated volume.

13. Method according to any one of Claims 8 to 12, comprising: outputting a warning signal if shifting of the partition from the storage position to the use position is detected and/or if longitudinal shifting of the partition is detected during a running phase of the body.
